# EUROPEAN PATENT SPECIFICATION

(11) **EP 2 717 557 B1**
(45) Date of publication and mention of the grant of the patent: **11.07.2018**
(21) Application number: 12187404.4
(22) Date of filing: 05.10.2012
(51) Int. Cl.: H04N 1/60

(54) **Method for composing an output profile**
Verfahren zum Zusammensetzen eines Ausgabeprofil
Procédé pour composer un profil de sortie

(43) Date of publication of application: 09.04.2014
(73) Proprietor: Canon Kabushiki Kaisha, Tokyo 146-8501 (JP)
(72) Inventor: Luttmer, Maurice L. M., 5941 GX Velden (NL); Van Der Linden, Erwin A. R., 5971 GC Grubbenvorst (NL)
(74) Representative: Draaisma, Henricus Johannes George

(56) References cited:
- EP-A1- 2 247 092
- EP-A2- 2 278 787
- US-B1- 6 947 174

## Description

### FIELD OF THE INVENTION

The invention relates to a method for controlling colour management for converting colours of a digital image for reproduction on a receiving medium in an output device, the receiving medium being selectable from a list of output media, the colours of the digital image being associated with an input colour space. The invention further relates to a computer program product for executing the invented method and a printing system comprising a printing engine for marking a receiving medium and a controller for converting a digital image to a printable image in dependence of the receiving medium with the application of profiles for colour conversion, comprising colour profiles and device link profiles.

### BACKGROUND OF THE INVENTION

In digital imaging systems, colour management is the controlled conversion between the colour representations of various devices, such as image scanners, digital cameras, monitors, printers, offset presses, and corresponding media. The primary goal of colour management is to obtain a good match across colour devices; for example, the colours of a digital image, comprising text, vector graphics and raster images, should appear the same on a computer monitor and on a reproduction of the image as a printed poster. Colour management helps to achieve the same appearance on all of these devices, provided the devices are capable of delivering the needed colour intensities. A cross-platform view of colour management is the use of an ICC-compatible colour management system (International Color Consortium), wherein each device is characterized by a relation between its device values, a device value defining a number of control values for an equal number of channels of a related colour imaging device, and the corresponding colour values, a colour value defining a colour in a device independent colour space, such as CIE XYZ or L*a*b*, which is called the profile connecting space (PCS). The mathematical space of device values is also known as a device dependent colour space, or device space, and comprises RGB and CMYK colour spaces. A colour value is measured by a physical instrument including colorimeters and spectrophotometers. Such a relation between device dependent and device independent colour values is saved in a colour profile, or ICC profile. These colour profiles comprise data for transforming device values to colour values (A2B) and in the reverse direction transforming colour values to device values (B2A). For an input device, such as a camera or a scanner, the A2B data are customarily applied, whereas for an output device, such as a printer or a monitor, the B2A data are customarily applied.

Another kind of profile is the device link profile. Instead of mapping between a device space and a PCS, it maps between two specific device spaces. While its application is less flexible, a device link profile allows for a more accurate or purposeful conversion of colour between two devices. It is obvious to compose a colour transform for the conversion of colours from an input device to an output device by combining the two corresponding colour profiles. This device link profile is readily applied to convert input device values to output device values, which is the purpose of a colour management system. In general, a combination of profiles in a colour transform is known, wherein the output colour space of an element in the combination agrees with the input colour space of a next element. Such a combination may further comprise abstract profiles, that define a colour transformation within a device independent colour space.

However, some profiling software programs allow the direct composition of a device link profile without an intermediate step of making colour profiles. Although the application of a device link profile is less flexible, because it is only applicable for a fixed combination of input and output devices, it has advantages in colour accuracy, channel maintenance and adjustment flexibility in inking schemes, such as under colour removal (UCR) and gray component replacement (GCR). Not all raster image processing software products (RIP) support the use of device link profiles as they only support a first colour profile as input, or source, profile, and a second colour profile, as output, or destination, profile. In a workflow for printing digital images on a printer with a variety of receiving media, various output profiles, either colour profiles or device link profiles, may be available, since the output colour space, or gamut, depends on a selected receiving medium, or output medium.

Another process in which profiles, both colour profiles and device link profiles, are useful, is a proofing process. Proofing is used to produce either a soft or hard copy of what the final product will look like on press. Since press time may be quite expensive, a short run of a print job may be made on a versatile digital printer to provide a hard copy prepress proof, that has the appearance of the output of a printing press. This is a cost effective way of providing a visual copy without the expense of creating a press proof. However, the gamut of a digital printer, which is the set of all available colours, is in general larger than the gamut of a printing press. Without appropriate action, the prepress proof may look better than the output of the printing press. Using colour management, a workflow may be defined that first converts an input image to the device space of the printing press and subsequently converts the image to the device space of the digital printer. In this last step the device space of the printing press acts as the input device space. The smaller gamut of the printing press is emulated by the digital printer. Due to the complexity of the workflow, there is a substantial possibility of a mistake, making the proofing not as reliable as necessary.

In general, colour management may be used to emulate with one device the colour behaviour of another device. In the same way as with proofing, it requires consirable effort of a user to understand the workflow and select the appropriate profiles. Hence, there exists a problem in controlling colour management in a convenient, transparant manner for complex workflows in making a reproduction of a digital image on a receiving medium in an output device.

It is an object of the present invention to facilitate the selection of various workflows involving a device link or involving an emulation of a second device.

### SUMMARY OF THE INVENTION

According to the present invention, the above mentioned object is achieved by a method for controlling colour management for converting colours of a digital image for reproduction on a receiving medium in an output device, the receiving medium being selectable from a list of output media, the colours of the digital image being associated with an input colour space, the method comprising the steps of obtaining an input colour profile that characterises said input colour space, selecting an output medium from the list of output media, obtaining at least two profiles associated with the selected output medium, the profiles being taken from a set of colour profiles and device link profiles, and composing a colour transform for the conversion of colours of the digital image as input data using the input colour profile and the at least two associated profiles. By associating more than one profile to an output medium and composing a colour transform using these profiles, it is possible to select a complex workflow by a selection of a receiving medium. This selection is a standard practice for users of an output device and no further knowledge of colour management is needed to obtain the correct colours.

In a further embodiment one of the at least two profiles is a device link profile and a second one is a colour profile. Therefore a device link profile does not have to be selected separately, but is selected by association with an output medium. In order to obtain agreement with an arbitrary input colour space of a digital image, a colour profile is selected additionally to enable a conversion from a PCS, where the input colour profile of the digital image converts to.

In a specific embodiment the device link profile maps between a colour space for a standard printing condition and an output colour space for the combination of a output medium and an output device. Such a colour space for a standard printing condition comprises colour spaces as defined in SWOP (Specification for Web Offset Publications), GRACoL2006 (General Requirements and Applications for Commercial Offset Lithography) or FOGRA39.

In another embodiment two profiles of the at least two profiles that are associated with an output medium are colour profiles. These are assimilated in a colour transform that establishes a special purpose workflow. In a further embodiment one of the two colour profiles is applied twice in the step of composing a colour transform, once in a reverse direction from the other. Although the colours are brought back in the same colour space as where they came from, the B2A part of this colour transform limits the colours to the gamut of the device associated with the twice applied colour profile, which makes this embodiment useful in a colour proofing workflow or any other (short run) colour emulation workflow.

Another embodiment of the present invention comprises a computer program product, including computer readable code embodied on a computer readable medium, said computer readable code comprising instructions for executing the steps of the methods described above.

A further embodiment comprises a printing system comprising a printing engine for marking a receiving medium and a controller for converting a digital image to a printable image in dependence of the receiving medium with the application of profiles for colour conversion, comprising colour profiles and device link profiles, the print system further comprising a module configured for composing a colour transform for the conversion of colours of the digital image as input data using an input colour profile and at least two profiles associated with a selected receiving medium.

Additional features and advantages of the invention will be set forth in the description that follows, and in part will be obvious from the description, or may learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter. However, it should be understood that the detailed description and specific examples, while indicating preferred embodiments of the invention, are given by way of illustration only, since various changes and modifications will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: is a view of a user interface for selecting an output medium and showing two associated profiles;
- Fig. 2: shows a standard workflow as known in the prior art;
- Fig. 3: shows a workflow for applying a device link profile is for the selected output medium;
- Fig. 4: shows a workflow for emulating the colour space of a second device; and
- Fig. 5: is a configuration of a print system for the application of the present invention.

### DETAILED DESCRIPTION OF EMBODIMENTS

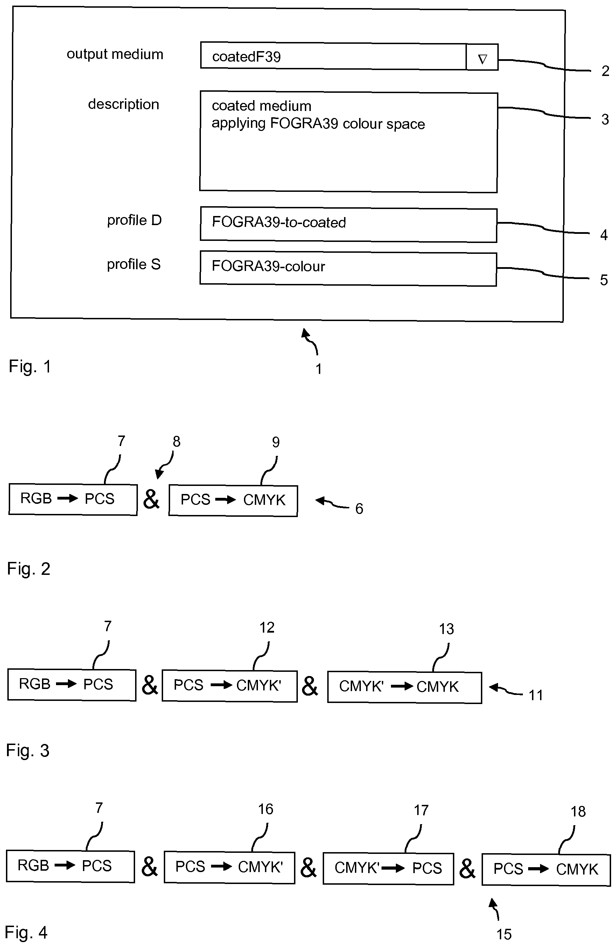

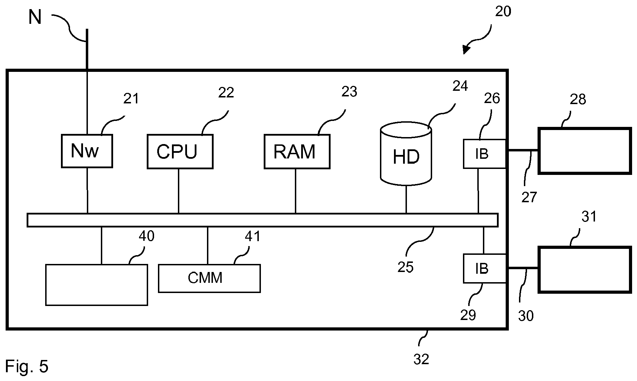

Fig. 1 is a user interface 1 on a display of a printing system 20 (Fig. 5) for selecting an output medium. A listbox 2 enables a user to select a preprogrammed output medium. At the time of programming this output medium, which may be restricted to a selected number of operators, a description of the output medium and two profiles, either colour profiles or device link profiles have been associated with this medium. These are shown to the user of the printing system in the three text boxes, description box 3, profile D 4, and profile S 5. By selecting an output medium, the workflow for colour management on the output side is set. If profile D 4 is not a device link profile, the specification of colour profile S 5 is optional.

In Fig. 2 a common colour management workflow 6, known from the prior art is indicated. An input colour profile 7, which may be a default colour profile, a purposely selected colour profile or an embedded colour profile, characterizes an input colour space for the input data. In this embodiment the input data are RGB-data, but equivalently the input data may be CMYK-data. An output colour profile 9 characterizes the output colour space of an output device, in dependence of an output medium. These profiles are combined, indicated by ampersand 8, to a colour transform that is used to convert the input data of a digital image to printable data.

Fig. 3 shows a colour workflow 11, involving a device link profile 13. In this workflow the input colour profile 7 is selected in a similar way as in workflow 6. However, in addition to device link profile 13, colour profile 12 is used to convert colour values in the PCS to device values in the input side of the device link profile 13. Both profiles 12 and 13 are associated with a selected output medium as respectively profile S 5 (Fig. 1) and profile D 4 (Fig. 1). For a general user of a print system that applies the association of two profiles with an output medium, the workflow 11 comes about just as conveniently as workflow 6, without bothering about colour management details. The device link profile 13 maps device values CMYK' for a second device to device values CMYK for a current output device. These device values CMYK' may also refer to standard printing conditions, such as SWOP, GRACoL2006, or FOGRA39.

Fig. 4 shows a colour workflow 15, involving a number of colour profiles. Input colour profile 7 is selected in a same way as in workflows 6 and 11. Colour profile 16 is the B2A part of associated profile S 5 (Fig. 1), colour profile 17 is the A2B part of associated profile S 5 (Fig. 1), and colour profile 18 is the B2A part of profile D 4 (Fig. 1). This workflow is used to emulate a second device, possibly having a smaller gamut than the current output device. The B2A part 16 limits the colours to the gamut of the second device, which may also refer to standard printing conditions.

A person skilled in the art will appreciate the impact of the present invention by considering the following print job submitted to an output device. A print job has a number of pages with the same image data. For each page a different output medium is specified. With the each output medium two profiles, profile D 4 (Fig. 1) and profile S 5 (Fig. 1) are associated. Each medium is associated with another printing engine. The colour management module will apply a colour workflow according to one of the workflows in Fig. 2, 3 and 4. The reproduction of the digital image will vary in concordance with the associated profiles, emulating the different printing engines on one output device.

Fig. 5 shows a configuration of a printing system 20 that comprises a print controller 32 and further comprises print engines 28 and 31. Both print engines apply CMYK device values. Each engine has its own set of output media and uses its own set of profiles characterizing an output colour space in dependence of an output medium. A network N is connected to a network module 21 for receiving print jobs with digital image data. A central processing unit 22, a volatile memory 23 and a non-volatile memory 24 are connected to a system bus 25. Further the configuration comprises a colour management module 41 and a set of profiles 40 for converting colours. The colour management module 41 composes a colour transform from the profiles associated with an output medium according to an appropriate colour workflow. This colour transform is used to convert the colours in the image data into device specific output data for output devices 28 and 31, respectively connected to system bus 25 of the print controller 32 by two interface boards 26 and 29 and connections 27 and 30. The programming of an output medium may be done either on the concerned output device or on the print controller, since the set of output media is synchronized between the two.

The above disclosure is intended as merely exemplary, and not to limit the scope of the invention, which is to be determined by reference to the following claims.

## Claims

1. A method for controlling colour management for converting colours of a digital image for reproduction on a receiving medium in an output device, the receiving medium being selectable from a list of output media, the colours of the digital image being associated with an input colour space, the method comprising the steps of:
- obtaining an input colour profile that characterises said input colour space;
- selecting an output medium from the list of output media;
- obtaining at least two profiles associated with the selected output medium, the profiles being taken from a set of colour profiles and device link profiles; and
- composing a colour transform for the conversion of colours of the digital image as input data using the input colour profile and the at least two associated profiles.

2. The method according to claim 1, wherein one of the at least two profiles is a device link profile and a second one is a colour profile.

3. The method according to claim 2, wherein the device link profile has a second device colour space as an input colour space and the colour profile characterises said second device colour space.

4. The method according to claim 3, wherein the second device colour space is a colour space for a standard printing condition.

5. The method according to claim 1, wherein two profiles of the at least two profiles are colour profiles.

6. The method according to claim 5, wherein one of the two colour profiles is applied twice in the step of composing a colour transform, once in a reverse direction from the other.

7. The method according to claim 6, wherein the twice applied colour profile characterises a second device colour space.

8. The method according to claim 7, wherein the second device colour space is a colour space for a standard printing condition.

9. The method according to claim 7, wherein the second device colour space is associated with a device that is emulated by the output device.

10. A computer program product, including computer readable code embodied on a computer readable medium, said computer readable code comprising instructions for executing the steps of the method of claim 1.

11. A printing system comprising a printing engine for marking a receiving medium and a controller for converting a digital image to a printable image in dependence of the receiving medium with the application of profiles for colour conversion, comprising colour profiles and device link profiles, the print system further comprising a module configured for composing a colour transform for the conversion of colours of the digital image as input data using an input color profile and at least two profiles associated with a selected receiving medium.

## Patentansprüche

1. Verfahren zur Steuerung des Farbmanagements für die Umwandlung von Farben eines in einer Ausgabeeinrichtung auf einem Empfangsmedium zu reproduzierenden Bildes, wobei das Empfangsmedium auswählbar ist aus einer Liste von Ausgabemedien, die Farben des digitalen Bildes mit einem Eingangsfarbraum verknüpft sind und das Verfahren die folgenden Schritte aufweist:
- beschaffen eines Eingangsfarbprofils, das den Eingangsfarbraum charakterisiert;
- auswählen eines Ausgabemediums aus der Liste der Ausgabemedien;
- beschaffen von wenigstens zwei Profilen, die mit dem gewählten Ausgabemedium verknüpft sind, wobei die Profile einem Satz von Farbprofilen und Gerätelinkprofilen entnommen sind;
- erstellen einer Farbtransformation für die Umwandlung von Farben des digitalen Bildes als Eingangsdaten unter Verwendung des Eingangsfarbprofils und der wenigstens zwei verknüpften Profile.

2. Verfahren nach Anspruch 1, bei dem eines der wenigstens zwei Profile ein Gerätelinkprofil und ein zweites Profil ein Farbprofil ist.

3. Verfahren nach Anspruch 2, bei dem das Gerätelinkprofil einen zweiten Gerätefarbraum als Eingangsfarbraum hat und das Farbprofil den zweiten Gerätefarbraum kennzeichnet.

4. Verfahren nach Anspruch 3, bei dem der zweite Gerätefarbraum ein Farbraum für einen Standard-Druckzustand ist.

5. Verfahren nach Anspruch 1, bei dem die beiden Profile unter den wenigstens zwei Profilen Farbprofile sind.

6. Verfahren nach Anspruch 5, bei dem eines der beiden Farbprofile in dem Schritt der Erstellung einer Farbtransformation zweimal angewandt wird, einmal in einer gegenüber der anderen Richtung umgekehrten Richtung.

7. Verfahren nach Anspruch 6, bei dem das zweimal angewandte Farbprofil einen zweiten Gerätefarbraum kennzeichnet.

8. Verfahren nach Anspruch 7, bei dem der zweite Gerätefarbraum ein Farbraum für einen Standard-Druckzustand ist.

9. Verfahren nach Anspruch 7, bei dem der zweite Gerätefarbraum mit einem Gerät verknüpft ist, das durch die Ausgabeeinrichtung emuliert wird.

10. Computerprogrammprodukt mit computerlesbarem Code auf einem computerlesbaren Medium, bei dem der computerlesbare Code Befehle für die Ausführung der Schritte des Verfahrens nach Anspruch 1 enthält.

11. Druckersystem mit einem Druckgerät zum Markieren eines Empfangsmediums und einer Steuereinrichtung zum Umwandeln eines digitalen Bildes in ein druckbares Bild in Abhängigkeit von dem Empfangsmedium und unter Anwendung von Profilen für die Farbumwandlung, welche Profile Farbprofile und Gerätelinkprofile umfassen, wobei das Druckersystem weiterhin ein Modul aufweist, das dazu konfiguriert ist, eine Farbtransformation für die Umwandlung von Farben des digitalen Bildes als Eingangsdaten zu erstellen, unter Verwendung eines Eingangsfarbprofils und wenigstens zweier Profile, die mit dem ausgewählten Empfangsmedium verknüpft sind.

## Revendications

1. Procédé pour commander la gestion de la couleur pour convertir des couleurs d'une image numérique pour une reproduction sur un support de réception dans un dispositif de sortie, le support de réception pouvant être sélectionné à partir d'une liste de supports de sortie, les couleurs de l'image numérique étant associées à un espace de couleur d'entrée, le procédé comprenant les étapes suivantes :
- l'obtention d'un profil de couleur d'entrée qui caractérise ledit espace de couleur d'entrée ;
- la sélection d'un support de sortie à partir de la liste de supports de sortie ;
- l'obtention d'au moins deux profils associés au support de sortie sélectionné, les profils étant pris à partir d'un ensemble de profils de couleur et de profils de liaison de dispositif; et
- la composition d'une transformation de couleur pour la conversion de couleurs de l'image numérique sous forme de données d'entrée à l'aide du profil de couleur d'entrée et des au moins deux profils associés.

2. Procédé selon la revendication 1, dans lequel l'un des au moins deux profils est un profil de liaison de dispositif et un second profil est un profil de couleur.

3. Procédé selon la revendication 2, dans lequel le profil de liaison de dispositif comporte un second espace de couleur de dispositif en tant qu'espace de couleur d'entrée et le profil de couleur caractérise ledit second espace de couleur de dispositif.

4. Procédé selon la revendication 3, dans lequel le second espace de couleur de dispositif est un espace de couleur pour une condition d'impression standard.

5. Procédé selon la revendication 1, dans lequel deux profils des au moins deux profils sont des profils de couleur.

6. Procédé selon la revendication 5, dans lequel l'un des deux profils de couleur est appliqué deux fois lors de l'étape de composition d'une transformation de couleur, une fois dans un sens inverse à l'autre.

7. Procédé selon la revendication 6, dans lequel le profil de couleur appliqué deux fois caractérise un second espace de couleur de dispositif.

8. Procédé selon la revendication 7, dans lequel le second espace de couleur de dispositif est un espace de couleur pour une condition d'impression standard.

9. Procédé selon la revendication 7, dans lequel le second espace de couleur de dispositif est associé à un dispositif qui est imité par le dispositif de sortie.

10. Produit-programme d'ordinateur, comportant un code lisible par ordinateur intégré sur un support lisible par ordinateur, ledit code lisible par ordinateur comprenant des instructions pour exécuter les étapes du procédé de la revendication 1.

11. Système d'impression comprenant un moteur d'impression pour marquer un support de réception et un dispositif de commande pour convertir une image numérique en une image imprimable en fonction du support de réception avec l'application de profils pour une conversion de couleur, comprenant des profils de couleur et des profils de liaison de dispositif, le système d'impression comprenant en outre un module configuré pour composer une transformation de couleur pour la conversion de couleurs de l'image numérique sous forme de données d'entrée à l'aide d'un profil de couleur d'entrée et d'au moins deux profils associés à un support de réception sélectionné.
